# NOUVEAU FASCICULE DE BREVET EUROPEEN

(11) **EP 0 240 411 B2**
(45) Date de publication et mention de la décision concernant l'opposition: **04.12.1996**
(45) Mention de la délivrance du brevet: 02.01.1992
(21) Numéro de dépôt: 87400654.7
(22) Date de dépôt: 24.03.1987
(51) Int. Cl.: G21C 3/32, G21C 3/34

(54) **Grille d'espacement pour assemblage combustible nucléaire**
Abstandshalter für Kernbrennstabbündel
Spacer grid for a nuclear fuel assembly

(30) Priorité: 02.04.1986 FR 8604708
(43) Date de publication de la demande: 07.10.1987
(73) Titulaire: FRAMATOME, 92400 Courbevoie (FR); COMPAGNIE GENERALE DES MATIERES NUCLEAIRES (COGEMA), F-78141 Vélizy-Villacoublay (FR)
(72) Inventeur: Denizou, Jean-Pierre, F-69290 Craponne (FR); Mouesca, Bruno, F-69006 Lyon (FR)
(74) Mandataire: Fort, Jacques

(56) Documents cités:
- EP-A- 0 052 924
- EP-A- 0 077 709
- EP-A- 0 080 853
- EP-A- 0 141 208
- EP-A- 0 184 064
- DE-A- 1 514 110
- FR-E- 0 191 358
- JP-A-55 078 294
- JP-A-56 057 986
- US-A- 3 820 226
- US-A- 3 904 475
- US-A- 4 388 269

## Description

La présente invention concerne les grilles d'espacement des crayons d'un assemblage combustible nucléaire, grilles du type comprenant au moins deux jeux entretoisés de plaquettes, chaque jeu étant constitué de plaquettes parallèles entre elles et fixées à leurs extrémités à une ceinture en forme de bande présentant des ailettes sur une arête longitudinale au moins.

La plupart des réacteurs à eau légère utilisent des assemblages combustibles à section carrée, comprenant un squelette formé par deux embouts reliés par des tubes-guides et plusieurs grilles du type ci-dessus, soudées à certains au moins des tubes-guides. Ces derniers occupent certains des noeuds d'un réseau à maille carrée, les autres noeuds étant occupés par des crayons de combustible.

Lors du chargement d'un assemblage combustible dans le coeur, ou de l'enlèvement d'un tel assemblage, ce dernier est déplacé verticalement par rapport à des assemblages en place. Lors de ce déplacement relatif, il arrive qu'une grille de l'assemblage en déplacement s'accroche sur une grille d'un assemblage voisin. Les accrochages impliquent généralement les coins de grilles.

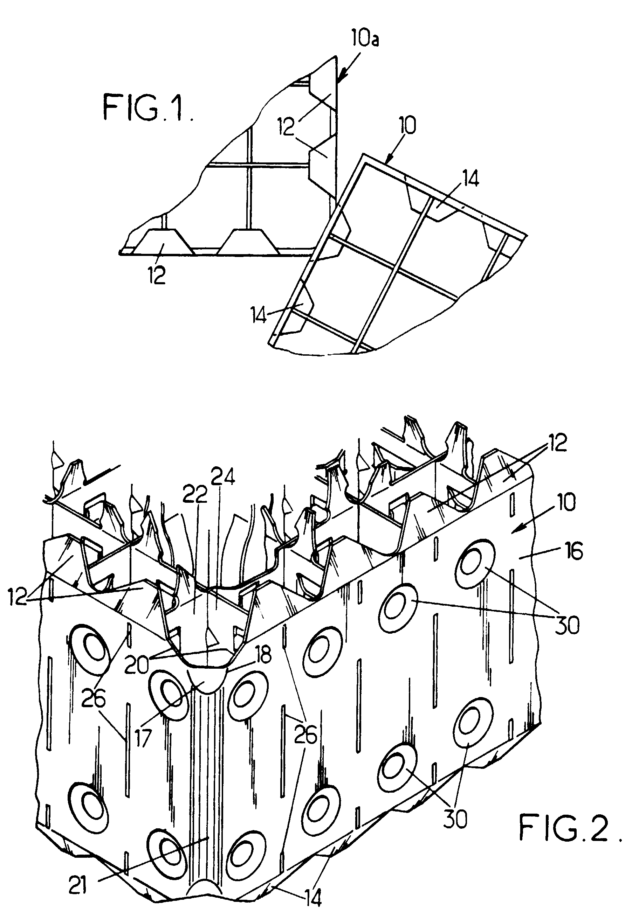

A titre d'exemple, la figure 1 montre, en vue de dessus, comment une grille 10 d'un assemblage en cours d'insertion par descente dans le coeur peut s'accrocher sur une grille 10a d'un assemblage déjà en place. Les ailettes 12 de guidage classiquement placées à la partie supérieure de certaines au moins des grilles ne permettent pas de "chasser" la grille de l'assemblage qui descend et d'éviter l'accrochage en cas de recouvrement. L'accrochage peut se produire non seulement entre deux assemblages placés en diagonale, mais aussi entre les côtés plats de deux grilles appartenant à des assemblages adjacents, quelle que soit la forme extérieure de l'assemblage, et en particulier entre assemblages à section hexagonale aussi bien qu'à section carrée.

De nombreuses tentatives ont été faites pour réduire le risque d'accrochage, qui peut endommager les grilles, voire même en arracher des tronçons qui sont alors entraînés dans le circuit primaire du réfrigérant. On a notamment proposé des solutions essentiellement applicables à des grilles dont la ceinture est constituée par une bande présentant de larges ouvertures délimitant des languettes pliées d'appui sur les crayons. Parmi les remèdes proposés en cas d'utilisation de telles grilles, on peut citer l'emploi de nervures en saillie débordant de la ceinture (FR-A-2 337 918). Cette solution ne diminue en rien le risque d'accrochage dans les angles. On a également proposé, dans le cas de grilles dont la ceinture présente une hauteur inférieure à celle des plaquettes, de tailler en biseau les coins de ces dernières et de former également un biseau sur les dièdres de la ceinture (FR-A-2 163 482). Cette solution présente des inconvénients et des limitations indiquées dans le document EP-A-52 924 qui propose, au lieu de tronquer les dièdres en biseau, de déformer les coins de grilles pour définir, à la partie haute et à la partie basse de chaque coin, un gousset oblique s'étendant jusqu'aux pliures qui définissent les languettes d'appui sur les crayons et les extrémités d'une ouverture pratiquée dans le coin de la ceinture, dans la direction des crayons.

Le document EP-A1- 0184 064, publié après la date de priorité, décrit une grille dont la ceinture est pourvue, dans les dièdres, d'ouvertures liées à la présence de ressorts.

L'invention vise à fournir une grille d'espacement répondant mieux que celles antérieurement connues aux exigences de la pratique, notamment en ce que le risque d'accrochage entre grilles d'assemblages adjacents est notablement réduit. Dans ce but, l'invention propose une grille du type ci-dessus défini conforme à la rev. 1 ou 3.

Dans un mode particulier de réalisation, le gousset constitue un capotage en forme de plan incliné ou de calotte sphérique.

La ceinture peut comporter de plus des bossettes d'espacement entre grilles d'assemblages adjacents, formées par emboutissage vers l'extérieur sur les faces plates de la ceinture, ayant une constitution similaire à celle des bossettes d'appui des crayons. Du fait de l'absence de découpe, ces bossettes d'espacement, qui participent à la suppression du risque d'accrochage par écartement relatif des grilles d'assemblages adjacents lors d'un mouvement axial relatif, ne peuvent être elles-mêmes source d'accrochage.

L'invention sera mieux comprise à la lecture de la description qui suit de modes particuliers d'exécution de l'invention, donnés à titre d'exemple non limitatif. La description se réfère aux dessins qui l'accompagnent, dans lesquels :
- la Figure 1, déjà mentionnée, est une vue de dessus d'une disposition relative de deux assemblages susceptibles de provoquer un risque d'accrochage lors de la manutention d'un assemblage adjacent à un assemblage en place ;
- la Figure 2 est une vue partielle en perspective montrant une fraction de grille suivant un mode avantageux de réalisation et de l'invention ;
- les Figures 3A et 3B sont des schémas montrant, en vue de dessus, divers emplacements possibles de soudure de tronçons de bande pour constituer une grille du genre montré en Figure 2 ;
- les Figures 4A et 4B sont des vues de détail à grande échelle montrant respectivement en élévation et de dessus, une fraction de ceinture soudée suivant la disposition montrée en figure 3A ;
- la Figure 5, similaire à la Figure 2, montre une variante de réalisation, comportant des bossettes d'écartement deux dispositions différentes possibles de ces bossettes étant montrées à la partie gauche et à la partie droite de la figure ;
- la Figure 6 est un schéma en vue de dessus montrant une disposition possible de bossettes d'écartement sur les grilles de deux éléments adjacents ;
- la Figure 7 est un schéma à grande échelle, en perspective, montrant une constitution possible d'un capotage d'angle d'une grille suivant une autre variante de réalisation de l'invention ;

Comme le montre la figure 1, à laquelle il a déjà été fait référence, les coins des grilles constituent des zones préférentielles d'accrochage. En conséquence l'adjonction, sous les grilles, d'ailettes telles que 14 destinées à ramener les grilles dans une position relative favorisant leur glissement l'une sur l'autre ne constitue qu'un palliatif très insuffisant. Les divers modes de réalisation de l'invention qui seront maintenant décrits ont pour but de faire apparaître, dans les coins de la grille, des surfaces ou des arêtes favorisant le glissement relatif de grilles adjacentes l'une sur l'autre et éloignant l'une de l'autre les zones des grilles pouvant provoquer des accrochages.

Dans le mode de réalisation montré en figure 2, la ceinture 16 de la grille présente, à chaque coin, deux goussets 17 formés par emboutissage. Chaque gousset fait un angle d'à peu près 45° avec l'axe de la grille. Le pli 18 qui délimite chaque gousset se raccorde à une troncature 20 ménagée sur les parties terminales de deux faces de la ceinture 16, troncature qui se raccorde à la base de la première ailette 12 de guidage prévue le long de l'arête correspondante. La longueur des arêtes vives de la troncature 20 est ainsi minimisée.

Par ailleurs, les deux faces qui constituent le coin se raccordent l'une à l'autre par un coude 21 en forme de quart de rond, qui diminue encore le risque d'accrochage. Ce quart de rond présente un rayon tel qu'il laisse subsister un jeu de passage du réfrigérant entre la ceinture et le crayon placé dans l'alvéole d'angle, délimitée par les plaquettes 22 et 24. Ces dernières peuvent être fixées à la ceinture 16 de façon connue, par exemple par engagement de tenons qui les terminent dans des fentes 26 de la ceinture et soudage. Ces plaquettes portent des ressorts d'application des crayons contre des appuis ménagés sur la ceinture.

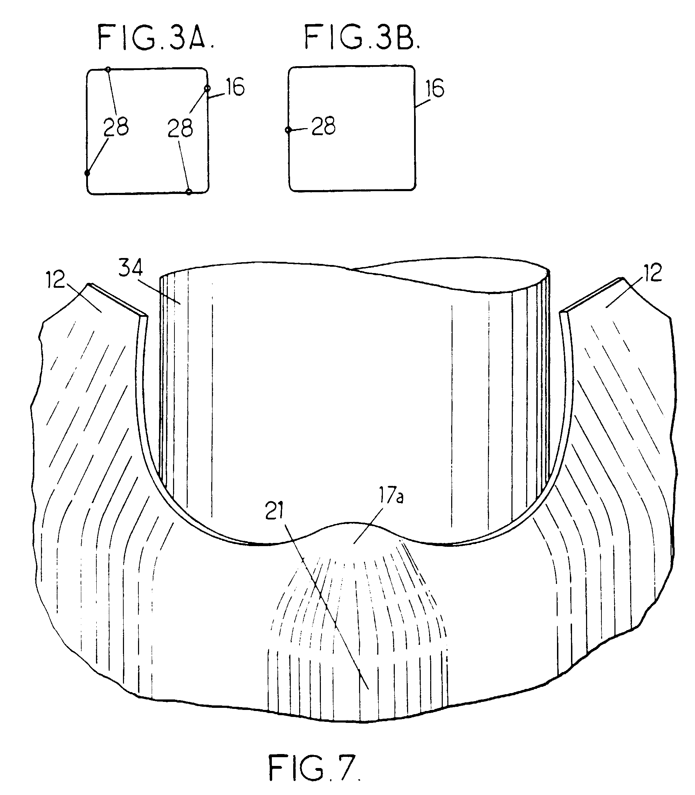

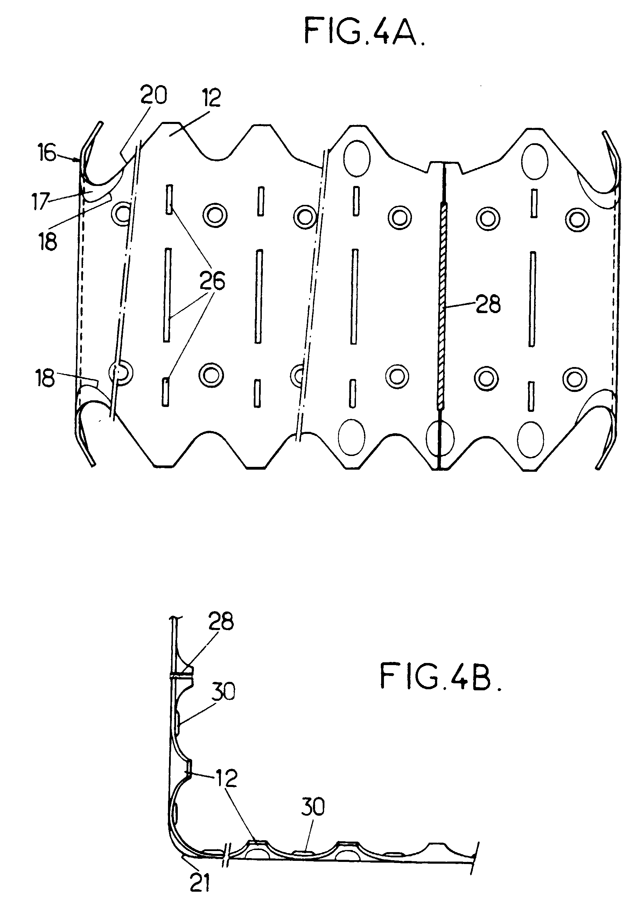

Les ceintures actuellement utilisées sont généralement constituées de quatre tronçons de bande soudés dans les quatre coins de la ceinture. Il est au contraire avantageux, lorsqu'on utilise la disposition montrée en figure 2,de constituer le quart de rond 21 par pliage en longueur courante d'un tronçon de bande et d'effectuer le raccordement par soudage en partie courante d'un des côtés de la ceinture. Les figures 3A et 3B montrent deux dispositions possibles des cordons de soudure 28. La position de ces cordons 28 constitue un compromis entre la recherche de la plus grande facilité possible d'emboutissage du tronçon de bande et le montage de la ceinture. Dans le cas montré en figure 3B, un seul tronçon est utilisé, présentant quatre pliages à 90°. Les extrémités de ce tronçon sont réunies l'une à l'autre par soudage en 28 au milieu d'une face. Dans le cas montré en figure 3A, quatre tronçons formés par pliage et emboutissage, puis soudés ensemble sur des tronçons rectilignes. Les Figures 4A et 4B montrent un exemple de réalisation conforme au schéma de la Figure 3A.

La disposition montrée en figure 2 est susceptible de nombreuses variantes de réalisation. Le gousset 17 n'a pas obligatoirement une forme plane. Il peut notamment être bombé et se rapprocher d'une calotte sphérique. Lorsque l'on accepte la présence d'une soudure en coin de la ceinture, le gousset peut être constitué par la juxtaposition de deux zones pliées appartenant à des tronçons de bande destinés à constituer deux faces de la ceinture.

Lorsque les coins de la ceinture sont réalisés par pliage d'un tronçon de bande, il est avantageux de constituer les moyens d'appui de crayons sur la ceinture, non pas par des crevés de la bande, mais par des bossettes formées par déformation sans découpe, ce qui renforce la résistance mécanique de la ceinture extérieure. Dans le mode de réalisation montré en figure 2, ces bossettes 30 sont en forme bouton et réalisées par déformation conique vers l'intérieur de la tôle constituant les tronçons de bande. Ces bossettes sont disposées en deux rangées parallèles, dans la zone de la bande dépourvue des entailles constituées par les fentes 26 de réception des tenons qui terminent les plaquettes 22 et 24. Elles servent d'appui aux crayons repoussés par des éléments élastiques portés par les plaquettes ou formées dans ces plaquettes.

Les dispositions décrites jusqu'ici ont essentiellement pour but de favoriser le glissement l'une sur l'autre des grilles lorsqu'elles entrent en contact et de permettre une fabrication simple de ces grilles. Il est utile, surtout lorsque des assemblages incluant des dispositions du genre décrites jusqu'ici sont utilisés en même temps que des assemblages de type connu, de prévoir sur la ceinture des grilles des moyens permettant d'écarter l'une de l'autre les grilles adjacentes avant que leurs coins ne viennent en contact. On décrira maintenant des exemples de telles dispositions, permettant d'éviter ou au moins de limiter le risque de voir deux grilles superposées venir en contact en conservant la disposition montrée en figure 1.

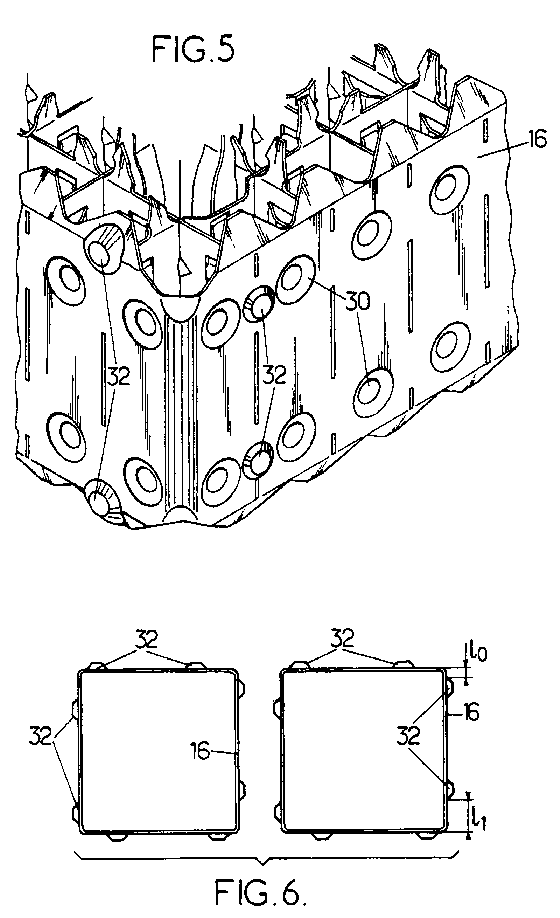

Dans le mode de réalisation montré en partie droite de la figure 5 (où les organes correspondant à ceux de la figure 2 sont désignés par le même numéro de référence), chaque côté de la ceinture 16 présente, à proximité de chaque coin, une rangée verticale de deux bossettes d'écartement 32. Les deux bossettes superposées peuvent être disposées entre les fentes de fixation d'une même plaquette (partie droite de la figure 5). Elles peuvent aussi bien être placées à la base des ailettes 12 (partie gauche de la figure 5). Les bossettes d'écartement peuvent être réalisées de la même façon que les bossettes d'appui 30, mais vers l'extérieur de la plaquette. Leur saillie peut être également du même ordre de grandeur que celle des bossettes 30, c'est-à-dire de quelques dixièmes de millimètre à 1,5 mm environ.

Les bossettes 32 présentent l'avantage supplémentaire de limiter l'arcure de l'assemblage qui en est muni et d'assurer un meilleur espacement des assemblages dans le coeur.

Lorsque la grille est constituée en un matériau, tel que les alliages à base de zirconium, susceptible de subir un grandissement sous irradiation, il est avantageux de disposer les bossettes 32 de façon à éviter que les bossettes de deux assemblages adjacents ne soient en vis à vis. Pour cela il suffit, sur une même face de la ceinture, de disposer les bossettes 32 à des distances L₀ et L₁ différentes du coin. De plus, ces bossettes peuvent être constituées de façon à s'écraser sous des efforts latéraux relativement faibles.

Il peut encore être utile de réduire le risque d'arc-boutement en arrondissant les arêtes vives des ailettes de guidage et/ou de mélange de filets fluides situés à proximité des coins de la ceinture, ce qui peut se faire par un procédé mécanique ou thermique.

On sait que différents matériaux ont été utilisés dans le passé pour constituer les grilles d'assemblage de combustible, notamment les alliages à base de zirconium et les alliages fer-chrome-nickel. Le choix est fait notamment en tenant compte de la condition à remplir en priorité, absorption neutronique minimale ou caractéristique mécanique élevée. Certains des matériaux utilisables permettent de réaliser, dans les coins des ceintures, des formes relativement complexes. Dans ce cas, il est avantageux de prolonger les goussets le plus possible vers le haut, éventuellement jusqu'aux crayons d'angle.

Dans le mode de réalisation de l'invention montré en figure 7 où les éléments déjà décrits sont une fois de plus désignés par le même numéro de référence, chaque gousset 17a fait saillie vers le haut au-delà de la basse des ailettes 12 et présente une forme bombée, se raccordant au quart de rond 21. Cette disposition laisse encore libre un jeu de passage de réfrigérant entre la ceinture de la grille et l'ensemble du pourtour du crayon d'angle 34.

Dans le cas où les goussets sont relativement courts, comme sur la figure 7, ils peuvent directement être formés par pliage et emboutissage de la ceinture.

## Revendications

1. Grille d'espacement des crayons d'un assemblage combustible nucléaire, comprenant au moins deux jeux entretoisés de plaquettes (22,24), chaque jeu étant constitué de plaquettes parallèles entre elles et fixées à leurs extrémités à une ceinture (16) en forme de bande présentant des ailettes (12,14) sur une arête longitudinale au moins,
caractérisée en ce que la ceinture est dépourvue d'ouvertures, en ce que deux au moins des dièdres sont tronqués par un pli arrondi en retrait par rapport aux prolongements des faces plates de la ceinture, et raccordé aux arêtes de ces faces par des goussets (17a) en pente vers l'intérieur de la ceinture (16), le pli tronquant chaque dièdre étant formé sur un tronçon de bande appartenant à la ceinture (16) et le gousset (17a) constituant un capotage en forme de plan incliné ou de calotte approximativement sphérique et en ce que des éléments d'appui des crayons sont formés par des bossettes (30) embouties sans découpe dans la ceinture, dirigées vers l'intérieur et réparties suivant deux rangées parallèles, situées l'une au-dessus de l'autre dans la direction longitudinale des crayons (34).

2. Grille selon la revendication 1, caractérisée en ce que le tronçon est fixé au reste de la ceinture par soudage (28) dans une face de cette dernière.

3. Grille d'espacement des crayons d'un assemblage combustible nucléaire, comprenant au moins deux jeux entretoisés de plaquettes (22,24), chaque jeu étant constitué de plaquettes parallèles entre elles et fixées à leurs extrémités à une ceinture (16) en forme de bande présentant des ailettes (12,14) sur une arête longitudinale au moins,
caractérisée en ce que la ceinture est dépourvue d'ouvertures, en ce que deux au moins des dièdres sont tronqués par un pli arrondi en retrait par rapport aux prolongements des faces plates de la ceinture, et raccordé aux arêtes de ces faces par des goussets (17,17a) en pente vers l'intérieur de la ceinture (16), en ce que la ceinture est constituée de quatre tronçons formés par pliage et emboutissage, ayant chacun un pli, chaque tronçon étant fixé au reste de la ceinture par soudage (28) dans une face de cette dernière et en ce que des éléments d'appui des crayons sont formés par des bossettes (30) embouties sans découpe dans la ceinture, dirigées vers l'intérieur et réparties suivant deux rangées parallèles, situées l'une au-dessus de l'autre dans la direction longitudinale des crayons (34).

4. Grille selon la revendication 1, 2 ou 3, caractérisée en ce qu'elle comporte de plus des bossettes (32) d'espacement entre grilles d'assemblages adjacents, formées par emboutissage vers l'extérieur sur les faces plates de la ceinture, ayant une constitution similaire à celle des bossettes d'appui des crayons.

## Patentansprüche

1. Abstandsgitter für Stäbe eines Kernbrennelementes mit wenigstens zwei miteinander verstrebten Plattensätzen (22,24), wobei jeder Satz aus zueinander parallelen und an deren Enden an einem die Form eines wenigstens an einer Längskante Flügel (12,14) aufweisenden Bandes habenden Umfangsband (16) befestigten Platten besteht,
**dadurch gekennzeichnet**,
daß das Umfangsband keine Öffnungen aufweist, daß wenigstens zwei der Dieder durch eine gegenüber den Verlängerungen der ebenen Flächen des Umfangsbandes nach hinten erfolgt und mit den Kanten dieser Flächen durch schräg zum Inneren des Umfangsbandes (16) gerichtete abgerundete Zwickel verbundene Abknickung abgestumpft ist, wobei die jedes Dieder abstumpfende Abknickung auf einem Abschnitt des Bandes, das zum Umfangsband (16) gehört, gebildet ist und der Zwickel (17a) eine Verkleidung in Form einer schrägen Ebene oder einer näherungsweise kugelförmigen Kappe bildet, und daß Auflageelemente der Stäbe ohne Ausschnitte des Umfangsbandes durch getriebene Buckel (30), die zum Inneren hin gerichtet, und entlang zweier zueinander paralleler, in Längsrichtung der Stäbe (34) übereinanderliegender Reihen gebildet sind.

2. Abstandsgitter nach Anspruch 1,
**dadurch gekennzeichnet**,
daß der Abschnitt am Rest des Umfangsbandes durch Schweißung (28) auf einer Fläche des Umfangsbandes befestigt ist.

3. Abstandsgitter für die Stäbe eines Kernbrennelementes mit wenigstens zwei miteinander verstrebten Plattensätzen (22,24), wobei jeder Satz aus zueinander parallelen und an deren Enden an einem die Form eines wenigstens an einer Längskante Flügel (12,14) aufweisenden Bandes habenden Umfangsband (16) befestigten Platten besteht,
**dadurch gekennzeichnet**,
daß das Umfangsband keine Öffnungen aufweist, daß wenigstens zwei der Dieder durch eine gegenüber den Verlängerungen der ebenen Flächen des Umfangsbandes nach hinten erfolgte und mit den Kanten dieser Flächen durch schräg zum Inneren des Umfangsbandes (16) gerichtete abgerundete Zwickel (17,17a) verbundene Abknickung abgestumpft sind, daß das Umfangsband aus vier Abschnitten besteht, die durch Krümmung und Treibung geformt sind und je einen Zwickel haben, und daß Auflageelemente der Stäbe ohne Ausschnitte des Umfangsbandes durch getriebene Buckel (30), die zum Inneren hin gerichtet, und entlang zweier zueinander paralleler, in Längsrichtung der Stäbe (34) übereinanderliegender Reihen gebildet sind.

4. Abstandsgitter nach Anspruch 1, 2 oder 3,
**dadurch gekennzeichnet**,
daß es außerdem Abstandsbuckel (32) zwischen Gittern benachbarter Kernbrennelemente aufweist, wobei diese durch Treiben nach außen auf den ebenen Flächen des Umfangsbandes gebildet sind und eine jenen der Auflagebuckel der Stäbe gleiche Form aufweisen.

## Claims

1. A grid for spacing the rods of a nuclear fuel assembly, comprising at least two interleaved sets of plates (22,24), each set consisting of mutually parallel plates, fixed at the ends thereof to a band-shaped belt (16) having fins (12,14) on at least one longitudinal edge,
characterized in that the belt is devoid of openings, in that at least two of the corners are truncated by a rounded bend which is inside with respect to extensions of the flat faces fo the belt and joined to the edges of the faces by gussets (17a) sloping towards the inside of the belt (16), the bend which truncates each corner being formed on a band section belonging to the belt (16) and the gusset (17a) constituting a hood shaped as a sloped plane or as an approximately spherical cap, and in that rod abutment elements are formed as bosses (30) stamped without cutting in the belt, directed inwardly and distributed in two parallel rows located above each other in the longitudinal direction of the rods (34).

2. Grid according to claim 1, characterized in that the section is fixed to the remainder of the belt by a weld (28) within a face of the latter.

3. A grid for spacing the rods of a nuclear fuel assembly, comprising at least two interleaved sets of plates (22,24), each set consisting of mutually parallel plates, fixed at the ends thereof to a band-shaped belt having fins (12, 14) on at least one longitudinal edge,
characterized in that the belt is devoid of openings, in that at least two of the corners are truncated by a rounded bend which is inside with respect to extensions of the flat faces of the belt and joined to the edges of the faces by gussets (17,17a) sloping towards the inside of the belt (16), in that the belt is constituted of four sections formed by bending and stamping, each having a bend, each section being fixed to the remainder of the belt by a weld (28) within a face of the latter, and in that rod abutment elements are formed as bosses (30) stamped without cutting in the belt, directed inwardly and distributed in two parallel rows located above each other in the longitudinal direction of the rods (34).

4. Grid according to claim 1, 2 or 3, characterized in that it further comprises bosses (32) for spacing the grids of mutually adjacent assemblies, formed by outward stamping on the flat faces of the belt, having a construction similar to that of the rod abutment bosses.
